# EUROPÄISCHE PATENTSCHRIFT

(11) **EP 1 006 293 B1**
(45) Veröffentlichungstag und Bekanntmachung des Hinweises auf die Patenterteilung: **25.06.2003**
(21) Anmeldenummer: 98122823.2
(22) Anmeldetag: 01.12.1998
(51) Int. Cl.: F16H 7/02, B23Q 5/56

(54) **Spannfutterantrieb**
Chuck driving means
Dispositif d'entraînement d'un mandrin

(43) Veröffentlichungstag der Anmeldung: 07.06.2000
(73) Patentinhaber: Konrad Seidler Maschinenbau-Werkzeugmaschinen GmbH, 41472 Neuss-Holzheim (DE)
(72) Erfinder: Seidler,Konrad, D-41472 Neuss-Holzheim (DE)
(74) Vertreter: Schüll, Gottfried, Dipl.-Phys.

(56) Entgegenhaltungen:
- EP-A- 0 260 477
- DD-A- 215 833
- DE-A- 19 541 790
- GB-A- 962 154
- NL-A- 9 001 378
- US-A- 4 747 321
- PATENT ABSTRACTS OF JAPAN vol. 12, no. 227 (M-713), 28. Juni 1988 & JP 63 023064 A (FANUC LTD), 30. Januar 1988

## Beschreibung

Die Erfindung betrifft einen Spannfutterantrieb, insbesondere einen Planscheibenantrieb für eine Drehmaschine, mit einem Antriebsmotor, einer Antriebswelle, einer Spannfutterwelle und einem Übersetzungsmittel zwischen Antriebswelle und Spannfutterwelle.

Derartige Spannfutterantriebe sind aus dem Stand der Technik in einer Vielzahl von Variationen bekannt. In den gängigsten Spannfutterantrieben werden als Übersetzungsmittel mechanische Getriebe eingesetzt. Diese mechanischen Getriebe haben sich in einer Vielzahl von Anwendungen bewährt. Sie gewährleisten exakte Übersetzungsverhältnisse und ermöglichen die Übertragung hoher bis sehr hoher Drehmomente. Auf der anderen Seite ist der Einsatz von Getrieben als Übersetzungsmittel auch unter verschiedenen Gesichtspunkten problematisch. Zunächst ist problematisch, daß mit einfachen Getriebekonstruktionen keine spielfreie Momentenübertragung gewährleistet werden kann. Dies führt insbesondere dann zu Problemen, wenn die an der Drehmaschine eingesetzten, spanabhebenden Werkzeuge abhängig vom Drehwinkel des Werkstücks variable Kräfte in den Spannfutterantrieb einleiten. Diese Kräftevariationen treten etwa dann auf, wenn ein Werkstück abgedreht wird, welches beispielsweise radial verlaufende Nuten aufweist. Diese Kraftvariationen treten aber insbesondere auch dann auf, wenn eine Drehmaschine im sog. C-Achsbetrieb eingesetzt wird. Bei diesem C-Achsbetrieb wird das Werkstück durch den Spannfutterantrieb gedreht, wobei gleichzeitig ein beliebiges Fräsprofil am Umfang des Werkstücks gefahren wird. Auch hier treten starke Kraftvariationen auf, die dazu führen, daß die vom Spannfutterantrieb übertragenen Drehmomente stark variieren. Um eine einwandfreie und reproduzierbare Bearbeitung des Werkstückes zu gewährleisten, ist es dabei notwendig, daß der Spannfutterantrieb absolut spielfrei arbeitet, d.h. unabhängig von den übertragenen Momenten eine gleichmäßige Winkelgeschwindigkeit des Spannfutters gewährleistet.

Aus dem Stand der Technik sind auch Spannfutterantriebe bekannt, die den geforderten spielfreien Antrieb des Spannfutters gewährleisten. Auch diese Spannfutterantriebe arbeiten auf Basis eines Getriebes, wobei innerhalb dieses Getriebes verschiedene Zahnräder verspannt gegeneinander arbeiten. Diese bekannten Spannfutterantriebe sind nun einerseits dahingehend problematisch, daß sie sehr aufwendig herzustellen und entsprechend kostspielig sind und andererseits, wie auch die einfachen Getriebe, vergleichsweise laut sind, d.h. hohe Schalldruckpegel erzeugen.

Aus der gattungsgemäßen DD 215 833 A1 ist ein Zahnriementrieb für die Übertragung hoher Drehzahlen und großer Drehmomente sowie zur Feinpositionierung bekannt, bei der mehrere auf einer Abtriebswelle angeordneten Zahnscheiben mittels schmaler Zahnriemen angetrieben werden. Zur Verminderung von Laufgeräuschen und Drehwinkelübertragungsabweichungen sind die Teilzahnscheiben achsenweise in gleichem Drehsinn zueinander verdreht, wobei der Drehwinkel miteinander über Zahnriemen im Eingriff stehenden Teilzahnscheiben auf der Antriebs und Abtriebsachse gleich sind. Besondere Maßnahmen zur spielfreien Momentenübertragung sind aus der DD 215 833 A1 nicht bekannt.

Ausgehend von der zuvor beschriebenen Problematik liegt also der Erfindung die Aufgabe zugrunde, einen Spannfutterantrieb zur Verfügung zu stellen, der eine spielfreie Momentenübertragung mit einfachen Mitteln bei hoher Laufkultur gewährleistet.

Erfindungsgemäß ist die zuvor hergeleitete und aufgezeigte Aufgabe dadurch gelöst, daß als Übersetzungsmittel auf der Antriebswelle eine Antriebszahnscheibe und auf der Spannfutterwelle einer Spannfutterzahnscheibe angeordnet ist, die Antriebszahnscheibe und/oder die Spannfutterzahnscheibe in einer Ebene senkrecht zur Antriebswelle und/oder Spannfutterwelle in mindestens zwei Teilzahnscheiben geteilt ist, die Antriebszahnscheibe und die Spannfutterzahnscheibe über mindestens zwei Zahnriemen verbunden sind, wobei die Zahnriemen auf die Antriebszahnscheibe und die Spanfutterzahnscheibe aufgelegt sind, die Breite der Zahnriemen der Höhe der Teilzahnscheiben entspricht und die auf die Teilzahnscheiben aufgelegten Zahnriemen gegeneinander verspannt sind.

Die erfindungsgemäße Lehre ermöglicht durch den Einsatz von Zahnscheiben und Zahnriemen eine preiswerte Verwirklichung eines Übersetzungsmittels für einen Spannfutterantrieb, wobei durch die Verspannung der zumindest auf zwei unterschiedlichen Teilzahnscheiben laufenden Zahnriemen eine spielfreie Drehmomentübertragung durch den Spannfutterantrieb gewährleistet ist. Gleichzeitig werden die bekannten Vorteile von Zahnriemenantrieben, nämlich der im Vergleich zu Getrieben nahezu geräuschlose Lauf bewahrt.

Eine erste vorteilhafte Ausgestaltung erfährt der erfindungsgemäße Spannfutterantrieb dadurch, daß eine Teilzahnscheibe auf der Antriebswelle zumindest über eine Keilverbindung befestigt ist und die andere Teilzahnscheibe auf der Antriebswelle über mindestens ein Ringspannelement befestigt ist. Hierzu ist zunächst zu sagen, daß es aus konstruktiven Gesichtspunkten ein Vorteil ist, die kleinere Antriebszahnscheibe in zwei Teilzahnscheiben zu teilen. Die erfindungsgemäßen Vorteile lassen sich jedoch prinzipiell sowohl durch eine geteilte Antriebszahnscheibe als auch durch eine geteilte Spannfutterzahnscheibe, als auch dadurch, daß beide Zahnscheiben geteilt sind, verwirklichen. Konstruktiv ist jedoch die Teilung der Antriebszahnscheibe vorzuziehen. Durch die Keilverbindung zwischen einer Teilzahnscheibe und insbesondere der Antriebswelle ist gewährleistet, daß diese Teilzahnscheibe drehfest mit der Antriebswelle verbunden ist. Um die erfindungsgemäß vorgesehene Verspannung zwischen den auf die unterschiedlichen Teilzahnscheiben aufgelegten Zahnriemen zu erzeugen, ist die andere Teilzahnscheibe auf der Antriebswelle über mindestens eine Ringspannelement befestigt, welches es ermöglicht, diese Teilzahnscheibe bei gelöstem Ringspannelement gegenüber der über eine Keilverbindung auf der Antriebswelle befestigten Teilzahnscheibe bei aufgelegten Zahnriemen so weit zu verdrehen, daß die gewünschte Verspannung vorliegt. Anschließend wird dann das Ringspannelement angezogen und stellt eine drehfeste Verbindung zwischen der anderen Teilzahnscheibe und der Antriebswelle her, so daß die Verspannung aufrechterhalten wird. Der Einsatz von Ringspannelementen ist insbesondere deshalb vorteilhaft, da diese einfach zu handhaben sind und gleichzeitig die schlupffreie Übertragung von hohen bis sehr hohen Drehmomenten gewährleisten.

Das Drehmoment, das benötigt wird, um die erforderliche Verspannung herzustellen, wird dadurch besonders einfach in die andere Teilzahnscheibe eingeleitet, daß die über Ringspannelemente auf der Antriebswelle befestigte Teilzahnscheibe auf einer axialen Außenfläche mindestens zwei axial verlaufende Bohrungen aufweist. Diese Bohrungen dienen dem Eingriff eines Spreitzschlüssels über den dann das zum Verspannen notwendige Moment aufgebracht wird.

Die Qualität der spielfreien Übertragung wird dadurch weiter verbessert, daß die Antriebszahnscheibe und/oder die Spannfutterzahnscheibe ein verkleinertes Zahnspiel aufweist. Insbesondere beträgt das Zahnspiel -0,1 mm. Man spricht hier von einer sog. engen Zahnlücke. Üblicherweise beträgt das Zahnspiel bei bekannten Zahnriemenantrieben +0,3 mm. Durch die enge Zahnlücke ist gewährleistet, daß der Zahnriemen selbst auf der jeweiligen Zahnscheibe absolut spielfrei läuft.

Dadurch, daß das Vorspannmoment gemäß einer weiteren Ausgestaltung der Erfindung größer als das maximal auftretende Antriebsmoment ist, ist gewährleistet, daß auch im Leertrum des negativ verspannten Zahnriemens stets eine Spannung vorhanden ist, die den spielfreien Lauf gewährleistet.

Zur Nutzung des erfindungsgemäß ausgestalteten Spannfutterantriebs im C-Achsbetrieb ist der Antriebsmotor als digital geregelter Servomotor ausgebildet und an dem Spannfutter ein Meßgeber für eine Steuerung des Antriebsmotors angeordnet. Hierdurch ist gewährleistet, daß die Steuerung des Antriebsmotors spielfrei über die Winkellage der Spannfutterwelle informiert ist.

Es gibt nun eine Vielzahl von Möglichkeiten, den erfindungsgemäßen Spannfutterantrieb auszugestalten und weiterzubilden. Hierzu wird beispielsweise verwiesen einerseits auf die dem Patentanspruch 1 nachgeordneten Patentansprüche und andererseits auf die Beschreibung eines bevorzugten Ausführungsbeispiels in Verbindung mit der Zeichnung. In der Zeichnung zeigt
- Fig. 1: ein Ausführungsbeispiel eines erfindungsgemäßen Spannfutterantriebs in einer Ansicht aus axialer Richtung und

- Fig. 2: einen axialen Schnitt durch die Antriebswelle und die Antriebszahnscheiben des Ausführungsbeispiels.

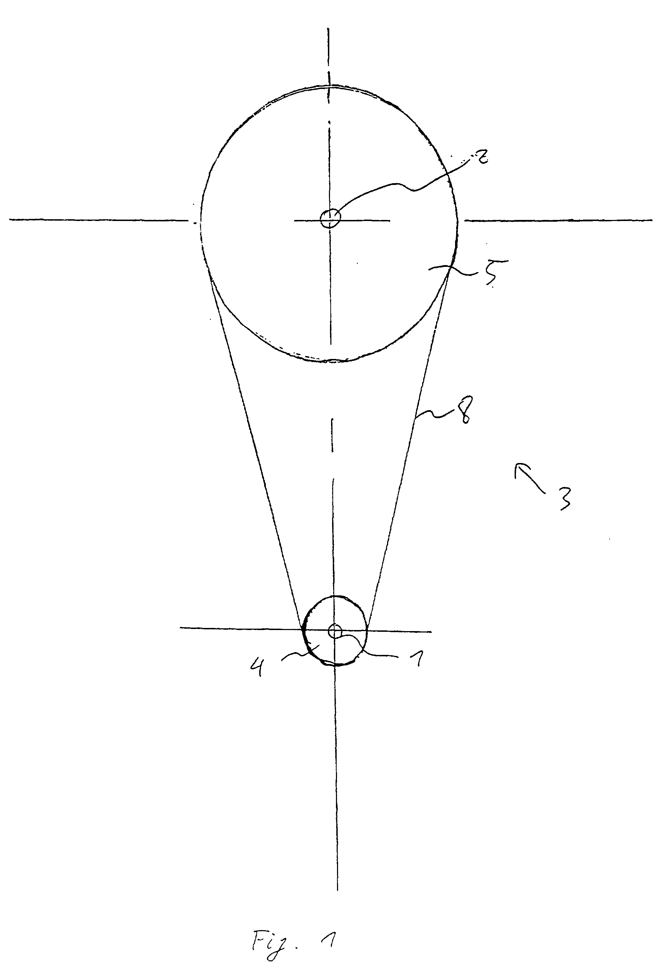

Fig. 1 zeigt ein Ausführungsbeispiel eines Planscheibenantriebs für eine Senkrecht oder Horizontal-Drehmaschine, mit einem nicht dargestellten Antriebsmotor, einer Antriebswelle 1, einer Spannfutterwelle 2 und einem Übersetzungsmittel 3 zwischen Antriebswelle 1 und Spannfutterwelle 2. Erfindungsgemäß sind als Bauteile des Übersetzungsmittels 3 auf der Antriebswelle 1 eine Antriebszahnscheibe 4 und auf der Spannfutterwelle 2 eine Spannfutterzahnscheibe 5 angeordnet.

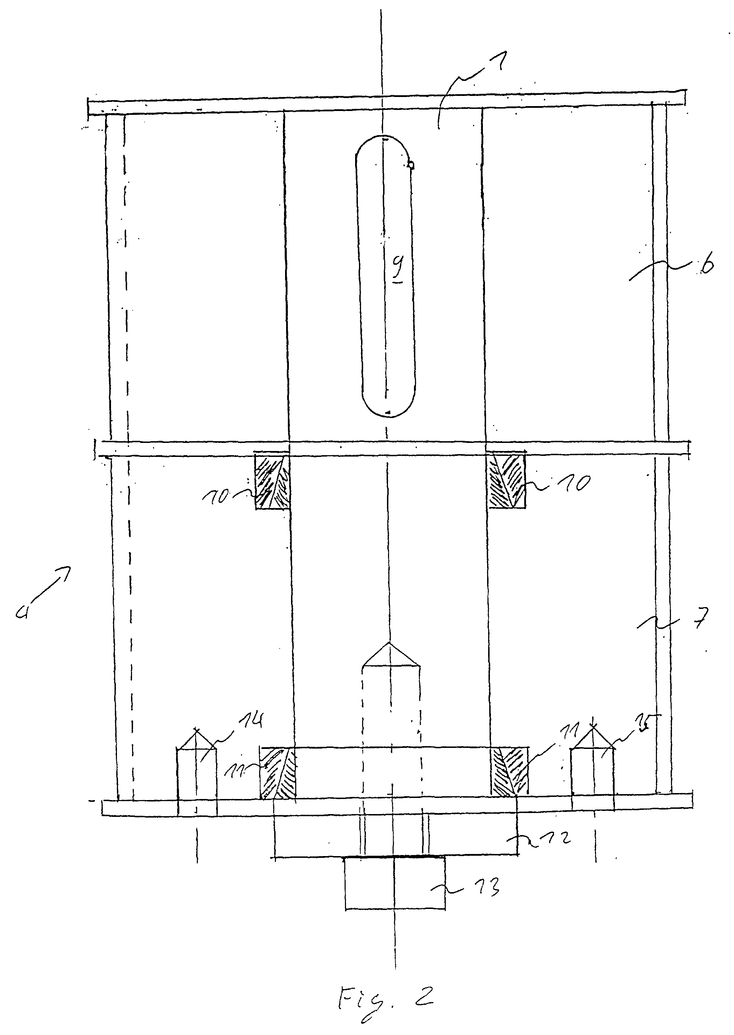

Aus Fig. 2 ist ersichtlich, daß die Antriebszahnscheibe 4 in einer Ebene senkrecht zur Antriebswelle 1 in zwei Teilzahnscheiben 6, 7 geteilt ist. Aus Fig. 1 ist wiederum ersichtlich, daß die Antriebszahnscheibe 4 und die Spannfutterzahnscheibe 5 über Zahnriemen 8 miteinander verbunden sind.

Da, wie aus Fig. 2 ersichtlich ist, die Antriebszahnscheibe 4 in zwei Teilzahnscheiben 6, 7 geteilt ist, sind die Antriebszahnscheibe 4 und die Spannfutterzahnscheibe 5 über zwei Zahnriemen 8, in Fig. 2 nicht dargestellt, miteinander verbunden, deren Breite der Höhe der Teilzahnscheiben 6, 7 entspricht. Schließlich sind zur spielfreien Drehmomentübertragung die auf die Teilzahnscheiben 6, 7 aufgelegten Zahnriemen 8 gegeneinander verspannt.

Zur Herstellung der Verspannung zwischen den Zahnriemen 8 ist eine Teilzahnscheibe 6 auf der Antriebswelle 1 über eine Keilverbindung 9 befestigt, während die andere Teilzahnscheibe 7 auf der Antriebswelle 1 über zwei Ringspannelemente 10, 11 befestigt ist. Ergänzend zur Keilverbindung 9 kann auch die Teilzahnscheibe 6 zusätzlich über ein oder zwei Ringspannelemente auf der Antriebswelle befestigt sein, um eine höhere Momentenübertragung zu gewährleisten. Eine derartige Ausgestaltung ist in Fig. 2 jedoch nicht dargestellt. Die Ringspannelemente 10, 11 werden bei dem in Fig. 2 dargestellten Ausführungsbeispiel über eine Andruckscheibe 12 und eine zugeordnete Schraube 13 angezogen.

Konkret werden die Zahnriemen 8 wie folgt gegeneinander verspannt. Nach dem Auflegen der Zahnriemen 8 auf die Antriebszahnscheibe 4 und die Spannfutterzahnscheibe 5 werden die Spannriemen 8 zunächst in bekannter Art und Weise gespannt. Hierbei sind die Teilzahnscheiben 6, 7 der Antriebszahnscheibe 4 noch nicht gegeneinander verdreht. Nachdem also der Zahnriemenantrieb in bekannter Art und Weise eingestellt worden ist, werden die Ringspannelemente 10, 11 so weit gelockert, daß sich die Teilzahnscheibe 7 auf der Antriebswelle 1 verdrehen läßt. Gleichzeitig wird die Antriebswelle 1 blockiert. Dies kann beispielsweise über ein Haltemoment des nicht dargestellten Antriebsmotors geschehen, oder über eine separate Bremse, die auch zu anderen Zwecken dient, an der Spannfutterwelle. Das Verspannen der Zahnriemen 8 gegeneinander erfolgt nun derart, daß ein nicht dargestellter Spreitzschlüssel, der beim dargestellten Ausführungsbeispiel beispielsweise zwei Bolzen aufweist, in entsprechend ausgeführte, axial verlaufende Bohrungen 14, 15 eingeführt. Dann wird in der Regel von Hand über den Spreitzschlüssel ein Moment in die Teilzahnscheibe 7 eingeleitet, welches zur Verdrehung der Teilzahnscheibe 7 auf der Antriebswelle 1 führt, was wiederum zu einer Verspannung der Zahnriemen 8 gegeneinander führt. Während dieses Moment aufgebracht wird, werden die Ringspannelemente 10, 11 dadurch angezogen, daß die Schraube 13 angezogen wird, wodurch über die Andruckscheibe 12 eine entsprechende axiale Kraft in die Ringspannelemente 10, 13 eingeleitet wird, was zu einer drehfesten Verbindung zwischen der Teilzahnscheibe 7 und der Antriebswelle 1 führt. Im Ergebnis sind dann also die Zahnriemen 8 die einerseits auf der Teilzahnscheibe 6 und andererseits auf der Teilzahnscheibe 7 laufen gegeneinander verspannt.

Zur Verbesserung der Spielfreiheit ist bei dem dargestellten Ausführungsbeispiel, in den Figuren nicht dargestellt, das Zahnspiel der Antriebszahnscheibe und der Spannfutterzahnscheibe verkleinert. Konkret bedeutet dies, daß der Abstand zwischen zwei Zahnflanken auf der Antriebszahnscheibe als auch auf der Spannfutterzahnscheibe um etwa 0,1 mm geringer ist als der Abstand zwischen zwei Flanken auf den Zahnriemen 8. Dies bezieht sich selbstverständlich auf die gleiche Zahnflanken zweier aufeinanderfolgender Zähne.

## Patentansprüche

1. Spannfutterantrieb, insbesondere Planscheibenantrieb, für eine Drehmaschine, mit einem Antriebsmotor, einer Antriebswelle (1), einer Spannfutterwelle (2) und einem Übersetzungsmittel (3) zwischen Antriebswelle (1) und Spannfutterwelle (2), wobei als Übersetzungsmittel (3) auf der Antriebswelle (1) eine Antriebszahnscheibe (4) und auf der Spannfutterwelle (2) eine Spannfutterzahnscheibe (5) angeordnet ist, die Antriebszahnscheibe (4) und/oder die Spannfutterzahnscheibe (5) in einer Ebene senkrecht zur Antriebswelle (1) und/oder Spannfutterwelle (2) in mindestens zwei Teilzahnscheiben (6, 7) geteilt ist, die Antriebszahnscheibe (4) und die Spannfutterzahnscheibe (5) über mindestens zwei Zahnriemen (8) verbunden sind, wobei die Zahnriemen (8) auf die Antriebszahnscheibe (4) und die Spannfutterzahnscheibe (5) aufgelegt sind, **dadurch gekennzeichnet, daß**
die Breite der Zahnriemen (8) der Höhe der Teilzahnscheiben (6, 7) entspricht und die auf die Teilzahnscheiben (6, 7) aufgelegten Zahnriemen (8) mit einem gewünschten Vorspannmoment gegeneinander verspannt sind.

2. Spannfutterantrieb nach Anspruch 1,
**dadurch gekennzeichnet, daß** eine Teilzahnscheibe (6) auf der Antriebswelle (1) zumindest über eine Keilverbindung (9) befestigt ist und die andere Teilzahnscheibe (7) auf der Antriebswelle (1) über mindestens ein Ringspannelement (10, 11) befestigt ist.

3. Spannfutterantrieb nach Anspruch 1 oder 2,
**dadurch gekennzeichnet, daß** die über Ringspannelemente (10, 11) auf der Antriebswelle (1) befestigte Teilzahnscheibe (7) auf einer zur Antriebswelle senkrechten Außenfläche mindestens zwei axial verlaufende Bohrungen (14, 15) aufweist.

4. Spannfutterantrieb nach einem der Ansprüche 1 bis 3,
**dadurch gekennzeichnet, daß** die Antriebszahnscheibe (4) und/oder die Spannfutterzahnscheibe (5) ein Zahnspiel kleiner +0,3 mm aufweist.

5. Spannfutterantrieb nach Anspruch 4,
**dadurch gekennzeichnet, daß** das Zahnspiel -0,1 mm beträgt.

6. Spannfutterantrieb nach einem der Ansprüche 1 bis 5,
**dadurch gekennzeichnet, daß** das Vorspannmoment größer als das maximal auftretende Antriebsmoment ist.

7. Spannfutterantrieb nach einem der Ansprüche 1 bis 6,
**dadurch gekennzeichnet, daß** der Antriebsmotor als digital geregelter Servomotor ausgebildet ist und an dem Spannfutter ein Meßgeber für eine Steuerung des Antriebsmotors angeordnet ist.

## Claims

1. A chuck drive, especially a face-plate drive, for a lathe, comprising a drive motor, a drive shaft (1), a chuck shaft (2) and a transmission means (3) between the drive shaft (1) and the chuck shaft (2), wherein as transmission means (3) a drive toothed disk (4) is arranged on the drive shaft (1) and a chuck toothed disk (5) is arranged on the chuck shaft (2), the drive toothed disk (4) and/or the chuck toothed disk (5) are divided in a plane perpendicular to the drive shaft (1) and/or the chuck shaft (2) into at least two part toothed disks (6, 7), the drive toothed disk (4) and the chuck toothed disk (5) are connected by at least two toothed belts (8), wherein the toothed belts (8) are placed on the drive toothed disk (4) and the chuck toothed disk (5),
**characterised in that**
the width of the toothed belts (8) corresponds to the height of the part toothed disks (6, 7) and the toothed belts (8) placed on the part toothed disks (6, 7) are braced towards one another with a desired pretension moment.

2. The chuck drive according to claim 1,
**characterised in that**
one part toothed disk (6) is affixed to the drive shaft (1) via at least one keying (9) and the other part toothed disk (7) is affixed to the drive shaft (1) via at least one ring tensioning element (10, 11).

3. The chuck drive according to claim 1 or claim 2,
**characterised in that**
the part toothed disk (7) affixed to the drive shaft (1) by means of ring tensioning elements (10, 11) has at least two axial bores (14, 15) on an outer surface perpendicular to the drive shaft.

4. The chuck drive according to any one of claims 1 to 3,
**characterised in that**
the drive toothed disk (4) and/or the chuck toothed disk (5) have a backlash of less than +0.3 mm.

5. The chuck drive according to claim 4,
**characterised in that**
the backlash is -0.1 mm.

6. The chuck drive according to any one of claims 1 to 5,
**characterised in that**
the pretension moment is greater than the maximum drive moment.

7. The chuck drive according to any one of claims 1 to 6,
**characterised in that**
the drive motor is constructed as a digitally controlled servomotor and a sensor for control of the drive motor is arranged on the chuck.

## Revendications

1. Commande à mandrin de serrage, notamment commande à contreplateau, pour un tour, avec un moteur de commande, un arbre menant (1), un arbre de mandrin de serrage (2) et un moyen de transmission (3) entre l'arbre menant (1) et l'arbre de mandrin de serrage (2), une roue plate de commande (4) étant disposée sur l'arbre menant (1) et une roue plate de mandrin de serrage (5) sur l'arbre de mandrin de serrage (2) pour servir de moyens de transmission (3), la roue plate de commande (4) et/ou la roue plate de mandrin de serrage (5) étant divisées en au moins deux roues plates partielles (6, 7) sur un plan perpendiculaire à l'arbre menant (1) et/ou à l'arbre de mandrin de serrage (2), la roue plate de commande (4) et la roue plate de mandrin de serrage (5) étant reliées par au moins deux courroies dentées (8), ces courroies dentées (8) étant montées sur la roue plate de commande (4) et la roue plate de mandrin de serrage (5),
**caractérisée en ce que**
la largeur des courroies dentées (8) correspond à la hauteur des roues dentées partielles (6, 7) et **en ce que** les courroies dentées (8) montées sur les roues plates partielles (6, 7) sont tendues l'une contre l'autre avec un moment d'un couple de précontrainte voulu.

2. Commande à mandrin de serrage selon la revendication 1,
**caractérisée en ce**
**qu'**une roue plate partielle (6) sur l'arbre menant (1) est fixée au moins par l'intermédiaire d'un clavetage (9) et l'autre roue plate partielle (7) sur l'arbre menant (1) est fixée par l'intermédiaire d'au moins un élément de serrage annulaire (10, 11).

3. Commande à mandrin de serrage selon la revendication 1 ou 2,
**caractérisée en ce que**
la roue plate partielle (7) fixée sur l'arbre menant (1) par l'intermédiaire d'éléments de serrage annulaires (10, 11) présente sur sa surface extérieure perpendiculaire à l'arbre menant au moins deux alésages (14, 15) de direction axiale.

4. Commande à mandrin de serrage selon l'une des revendications 1 à 3,
**caractérisée en ce que**
la roue plate de commande (4) et/ou la roue plate de mandrin de serrage (5) présentent un jeu inférieur à +0,3 mm.

5. Commande à mandrin de serrage selon la revendication 4,
**caractérisée en ce que**
le jeu est de -0,1 mm.

6. Commande à mandrin de serrage selon l'une des revendications 1 à 5,
**caractérisée en ce que**
le moment d'un couple de précontrainte est supérieur au moment d'un couple moteur maximum constaté.

7. Commande à mandrin de serrage selon l'une des revendications 1 à 6,
**caractérisée en ce que**
le moteur de commande est configuré comme un servomoteur à réglage numérique et **en ce qu'**un capteur de mesure est disposé sur le mandrin de serrage pour un pilotage du moteur de commande.
